# EUROPEAN PATENT APPLICATION

(11) **EP 4 604 603 A1**
(43) Date of publication of application: **20.08.2025**
(21) Application number: 24158341.8
(22) Date of filing: 19.02.2024
(51) Int. Cl.: H04W 24/10

(54) **USER EQUIPMENT AND BASE STATION INVOLVED IN TRANSMISSION OF DATA**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment, UE, comprising the following. A circuitry of the UE, which in operation, determines a measurement gap, MG, of a configured MG pattern with a plurality of measurement time gaps, the MG being usable by the UE for performing measurements within the MG. Further, the circuitry determines a radio resource to be used by the UE for communication of data with a base station and the circuitry drops the MG overlapping the radio resource in time domain. Further, UE comprises a transceiver, which in operation, communicates data with the base station using the radio resource.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved transmission procedures.

In an embodiment, the techniques disclosed here feature a user equipment, UE, comprising the following. A circuitry of the UE determines a measurement gap, MG, of a configured MG pattern with a plurality of measurement time gaps, the MG being usable by the UE for performing measurements within the MG. The circuitry determines a radio resource to be used by the UE for communication of data with a base station. The circuitry drops the MG overlapping the radio resource in time domain,

The transceiver communicates data with the base station using the radio resource.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system to which the exemplary embodiments of the present disclosure may be applied;
- **Fig. 2**: shows exemplary functional split options in 5G open-radio access network (O-RAN),
- **Fig. 3**: illustrates the arrival of video frame data and a configured MG patter,
- **Fig. 4**: illustrates an exemplary and simplified structure of a communication device and a base station,
- **Fig. 5**: illustrates a structure of the communication device according to an exemplary embodiment of the present disclosure,
- **Fig. 6**: illustrates a structure of the base station according to an exemplary embodiment of the present disclosure,
- **Fig. 7**: illustrates a flow diagram for the communication device according to an exemplary embodiment of the present disclosure,
- **Fig. 8**: illustrates a flow diagram for the base station according to an exemplary embodiment of the present disclosure,
- **Fig. 9**: is a signaling diagram illustrating an exemplary exchange between a UE and a gNB according to an exemplary embodiment of the present disclosure,
- **Fig. 10**: illustrates a data communication according to an exemplary embodiment;
- **Fig. 11**: illustrates a data communication according to a further exemplary embodiment;
- **Fig. 12**: illustrates a data communication according to a further exemplary embodiment;
- **Fig. 13**: illustrates a data communication according to a further exemplary embodiment;
- **Fig. 14**: illustrates a data communication according to a further exemplary embodiment;
- **Fig. 15**: illustrates a data communication according to a further exemplary embodiment;
- **Fig. 16**: illustrates a dropping pattern to an exemplary embodiment;
- **Fig. 17**: illustrates an extend on-duration according to an exemplary embodiment;
- **Fig. 18**: illustrates postponed MG according to an exemplary embodiment; and
- **Fig. 19**: illustrates an aligned MG pattern according to an exemplary embodiment.

### DETAILED DESCRIPTION

### 5G NR system architecture and protocol stacks

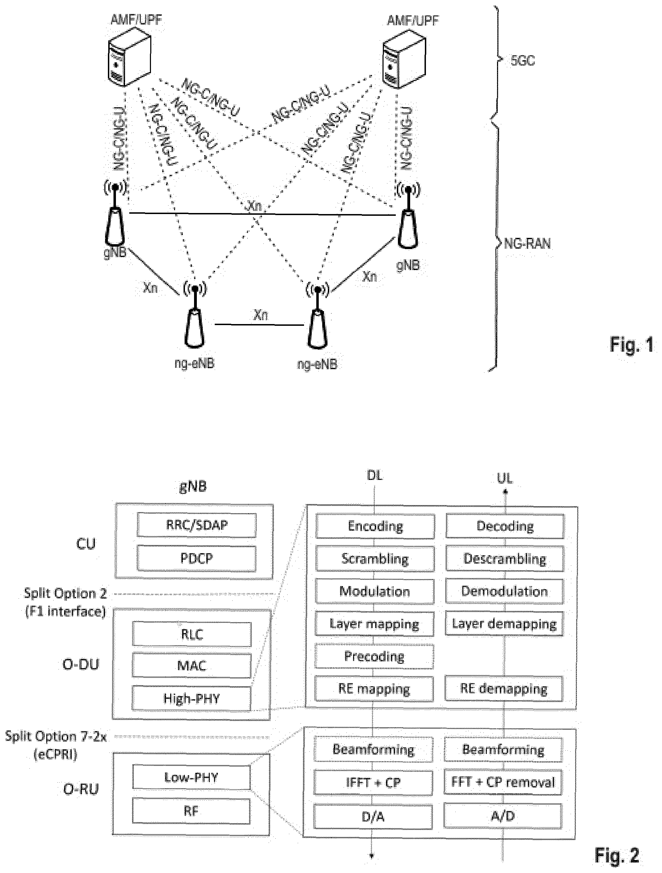

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signallingonly connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, subbandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### XR - extended Reality in Rel. 18

A 3GPP study item relates to extended Reality (XR) in RAN 1 and RAN 2. The aim is to provide efficient communications for augmented reality (AR), virtual reality (VR), mixed reality (MR) and cloud gaming, while reducing the power consumption and increasing the system capacity. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams and pose/control traffics. The video frames are quite large with varying sizes. They are characterized as quasi-periodic, because video frames arrive over a time window. In addition, the periodicity of the time window is non-integer regarding radio frame/slot/symbols.
- Packet size: For a high-quality video stream, the frame size would be around 1M bits after compression for an 8K video. This leads to having large size packets.
- Varying size: The frame sizes could vary e.g. due to the I-frame or P-frame/B-frame.
- Periodicities: A video stream generally generates 60/90/120 fps, which correspond to the periodicity of 16.667, 11.111, and 8.333 ms, respectively.
- Jitter: The frame packets would arrive at the gNB/UE over a time window of e.g. [-4, 4] ms or even a larger time window.
- Delay budget: The delay budget for delivering the XR packets could be tight, for instance, 10ms for AR/VR and 15ms for cloud gaming.

### Discontinued Reception, DRX, in LTE and 5G NR

To reduce the battery consumption in the UE, a mechanism is used to minimize the time the UE spends monitoring the PDCCH, which is called the Discontinuous Reception (DRX) functionality. UE side DRX is defined in 3GPP, e.g. in 3GPP Technical Standard TS 36.321, 17.5.0, chapter 5.7, as well as in 3GPP TS 38.331 v17.5.0 (see e.g. *DRX-Config* Information Element in section 6.3.2).

DRX reduces the battery consumption of UEs by allowing them to periodically turn off their receivers for specified intervals. This intermittent receive strategy saves energy, especially in scenarios where the device may not have continuous data to receive.

Specifically, the DRX cycle is divided into two main periods: an On Duration and an Off Duration. During the On Duration, the UE's receiver is active, monitoring the channel for incoming data or control signals. In contrast, during the Off Duration, the receiver is turned off to conserve power.

DRX parameters can be configured by the base station to optimize power consumption and latency for specific use cases and network conditions. These parameters include the length of the on and off durations, the timing of the DRX cycles, and the type of DRX pattern (e.g., short DRX, and long DRX).

DRX can be triggered by various events, such as a lack of data to receive, explicit commands from the network, or timers set by the UE itself. For example, if the UE has no data to transmit or receive for a certain period of time, it may enter a DRX state to save power.

While DRX helps to save power, it can also introduce latency, especially if the UE has to wait until the next on duration to receive data. Therefore, DRX parameters must be carefully configured to balance power efficiency with acceptable levels of latency and throughput.

In NR 5G, DRX mechanisms can dynamically adapt to changing network conditions and traffic patterns. For example, during periods of high network activity, such as receiving a video stream with periodically received frames, DRX parameters can be adjusted to minimize latency and maximize throughput, while during idle periods, they can be optimized for power savings.

### Measurement gap(MG)

3GPP has agreed that MGs are supported. The MG is required to perform measurements when the UE cannot simultaneously measure the target carrier frequency while transmitting/receiving on the serving cell. In other words, the MG refers to a period of time during which the device's receiver is temporarily inactive for measurements. The MG gap allows the device to perform various measurements without interfering with ongoing transmissions. The measurement procedure is defined in 3GPP, e.g. in 3GPP Technical Standard TS 38.133, version 18.4.0, Chapter 9.

The need for a MG in NR depends on the capability of the UE, the active BWP of the UE and the current operating frequency. In NR, MGs may be required for intra-frequency, inter-frequency and inter-RAT measurements.

The UEs shall support the MG patterns listed in the following table 1:

**Table 1**

| **MG Pattern Id** | **Measurement Gap Length (MGL, ms)** | **Measurement Gap Repetition Period (MGRP, ms)** |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

The UE determines the MG timing based on the gap offset configuration and the MG timing advance configuration provided by higher layer signaling. The gap offset is defined as the offset of the gap pattern. There are about 160 offset values, but all values are not applicable for all periodicities. The offset values point to the starting subframe within the period, its value range is from 0 to MGRP-1. For example, if the periodicity is 20 ms, the offset ranges from 0 to 19. If the MG timing advance (Mgta) is configured, the UE starts the measurement Mgta ms before the gap subframe occurrence i.e., the MG starts at time Mgta ms advanced to the end of the latest subframe occurring immediately before the MG. The amount of timing advance can be 0.25 ms (FR2) or 0.5 ms (FR1).

In NR, an RF re-tuning time is applied. There are various bands below 6 GHz in 4G LTE networks. In NR, frequency range 1 (FR1) overlaps and extends 4G LTE frequencies, including various bands from 450 MHz to 6,000 MHz, which is commonly referred to as NR sub-6 GHz. NR further includes a frequency range 2 (FR2) covering from 24,250 MHz to 52,600 MHz, which is commonly referred to as mm-Wave, even though the millimeter wave frequency may start at 30 GHz strictly speaking. For example, the re-tuning time is 0.5 ms for carrier frequency measurements in the FR1 range and 0.25 ms in the FR2 range. For example, a gap length of 4 ms for FR1 measurements would allow 3 ms for actual measurements and a gap length of 3.5 ms for FR2 measurements would allow 3 ms for actual measurements.

The applicability of the MG patterns is further specified (see e.g. Tables 9.1.2-2 and 9.1.2-2 of 3GPP Technical Standard TS 38.133, e.g. version 18.4.0). In particular, NR defines two types of MG, i.e., per-UE and per-FR. The per-UE gap (gapUE) is applied to both FR1 and FR2 frequencies. For the per-FR gap, two independent gap patterns are defined for FR1 (gapFR1) and FR2 (gapFR2). If the gapUE is configured, neither of gapFR1 nor gapFR2 can be configured. The MeasGapConfig IE specifies the MG configuration and controls setup/release of MG by RRC.

Typically, the UE measures reference signals (RS), which are described in more detail below.

During the MG, the MAC entity is not required to perform the following during the MG (see e.g. section 9.1.2 of 3GPP TR 38.133 e.g. version 18.4.0).
- Send HARQ feedback, SR, and CSI
- Report SRS
- Transmit on UL-SCH except for Msg3
- Receive DL-SCH
- Monitor the PDCCH except the UE is waiting for Msg2 or Msg4 during RA procedure.

Such restrictions could introduce additional delay and affect the communication performance.

### Reference Signals

Several different types of reference signals (RS) are used for 5G NR (see 3GPP TS 38.211 v17.4.0 section 7.4.1). These reference signals may be used during in the MG. At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see TS 38.214)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is **UE-specific; nonetheless, multiple users can share the same CSI-RS** resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Further Improvements

As presented above, in particular for XR applications, a stream (e.g., a video stream or an audio stream) may comprise a plurality of media frames, where each of the media frames is quite large. Further, the stream traffic can be characterized as quasi-periodic, where each of a plurality of media frames arrives over a time window. Further, the time window during which each of the media frames arrives is defined by a frame rate of frames per second (fps).

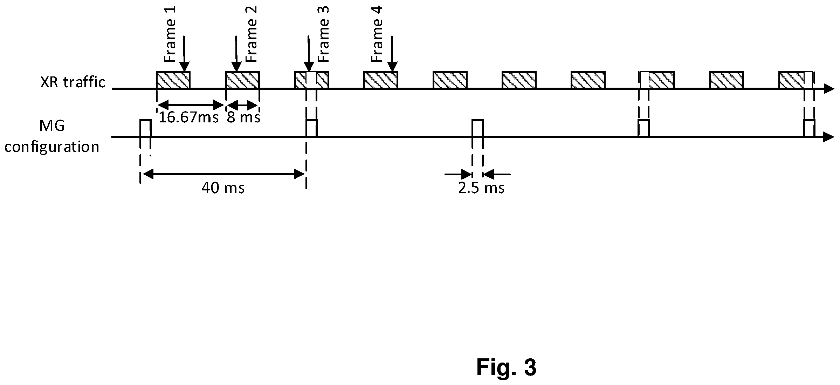

This situation is illustrated in Figure 3. For ease of illustration and understanding, exemplary assumptions are made as follows. A video stream of 60 fps is assumed, so that a video frame (also called a media frame) is generated every 1/60 s, which is approximately 16.6667 ms. The video frames are generated with a jitter window of 8 ms.

As discussed above, the UE is configured with MGs. For ease of illustration and understanding, exemplary assumptions are made as follows. A MG is configured with a periodicity of 40 ms, a MG length of 1.5 ms and an RF re-tuning time of 1 ms, resulting in a duration of each MG of 2.5 ms.

When a frame arrives, the gNB schedules the DL transmission. However, if the UE is performing a measurement such as a Radio Resource Management (RRM) measurement, e.g. frequency RRM MGs or FR2 intra-frequency measurements, or has other scheduling constraints, the gNB **has to wait until the RRM measurement is completed; then the gNB** can schedule the UE to receive data (e.g. when a frame 3 arrives). This causes an additional delay in the delivery of the video frame. A similar limitation applies to UL data transmissions. In addition, the delay can be increased when DRX functionality is enabled.

The technical problem to be solved is to reduce the delay in order to improve the transmission/reception due to the MG limitations.

The inventors have therefore identified the possibility of providing improved transmission methods to avoid one or more of the disadvantages described above. The present invention relates to various solutions and variants for such improved transmission methods.

However, XR and video streams are only particular exemplary scenarios for which the above disadvantages exist. Other scenarios also exist. Consequently, the present invention and its solutions do not only apply to XR and video streams. For example, the solutions could be applied to other similar traffic, such as video broadcasting.

### Embodiments

In the following, communication devices which may be UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

As used herein, the term **"measurement gap"** or "MG" refers to a time domain opportunity provided to the UE to perform measurements on, for example, reference signals. The network may configure a UE with a plurality of MGs, e.g. via RRC signaling, thereby configuring a MG pattern. The network may configure these MGs so that they do not coincide with UE transmissions or receptions. A UE may be configured with multiple MGs.

The term **"radio resource"** as used herein may include both periodic radio resources and dynamically allocated radio resources. Radio resources encompass various parameters such as frequency, time and spatial dimensions and are allocated and used according to the specific requirements and constraints of the communication system. The radio resources refer to the allocation in the time domain within a communication frame for sending and receiving data.

The term **"dropping"** as used herein can be understood, for example, as the act of not taking advantage of an opportunity, i.e. the UE does not use a MG determined from the configured MG pattern to perform measurements.

The term **"overlap"** as used here can be understood as an overlap in time. Two scheduled events, e.g. the MG and the radio resource, overlap in time if two or more activities are scheduled to take place simultaneously or in partially overlapping time periods.

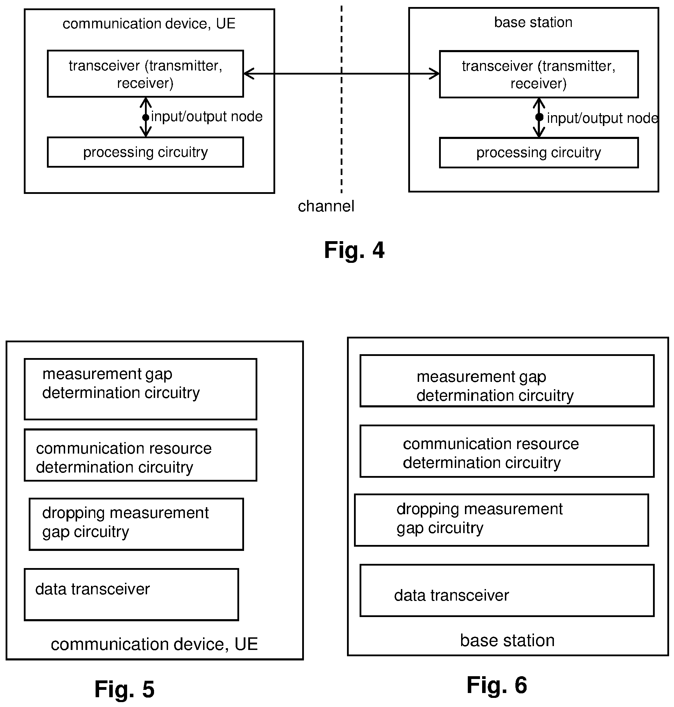

**Fig. 4** illustrates a general, simplified and exemplary block diagram of a UE (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved transmission procedures will be described in the following. In said connection, improved UEs, improved base stations and improved integrated circuits are presented, which participate separately or together in the improved transmission procedures. Corresponding methods for the UE behavior and the base station behavior are provided as well. The integrated circuits may correspond to the UE and base station, and respectively their behavior.

The present solutions of the improved transmission procedures can be based on some or a combination of the different mechanisms described above in context of the exemplary 3GPP 5G-NR implementations, including e.g. the use of the signaling mechanisms (e.g. for configuring periodic uplink resources, CG) or details on the implementation scenarios (see XR) as currently discussed in 3GPP.

**Fig. 5** illustrates a simplified and exemplary UE structure according to an exemplary implementation of the improved transmission procedure, which can be implemented based on the general UE structure explained in connection with Fig. 4. The various structural elements of the UE illustrated in said Fig. 5 can be interconnected between one another e.g., with corresponding input/output nodes (not shown) e.g., in order to exchange control and user data and other signals. Although not shown for illustration purposes, the UE may include further structural elements.

As apparent from Fig. 5, the UE may include a MG determination circuitry, a communication resource determination circuitry, a dropping MG circuitry, and a data transceiver.

In the present case as will become apparent from the below disclosure, the processing circuitry of the UE can thus be exemplarily configured to at least partly perform one or more of determining a MG, determining radio resources, dropping MGs, determining a MG priority and a radio resource priority, etc.

In the present case as will become apparent from the below disclosure, the transceiver of the UE can thus be exemplarily configured to at least partly perform one or more of communicating data, receiving the MG priority from the base station, etc.

One exemplary procedure as will be disclosed in more detail further below is implemented by a UE that includes the following. A processing circuitry of the UE determines a MG of a configured MG pattern with a plurality of measurement time gaps, the MG being usable by the UE for performing measurements within the MG. The processing circuitry determines a radio resource to be used by the UE for communication of data with a base station. The processing circuitry drops the MG overlapping the radio resource in time. A transceiver of the UE communicates data with the base station using the radio resource.

In an example, a MG may be selectively arranged to prioritize an expected data transmission when the MG collides with the data transmission. For instance, the selected MG may be disregarded by dropping or skipping. In particular, the selected MG may be dropped if it has a lower priority with respect to the priority of the data (e.g., UL data) expected to be transmitted. Alternatively, the selected MGs during a configurable period may be dropped, a configurable numbers of MGs may be dropped, or the selected MGs which overlap with a configurable skipping pattern may be dropped. Alternatively, the selected MGs may be skipped by means of an active window feature (e.g., ON duration of a DRX), for example, by extending an ending edge of an ON duration of a DRX beyond the end of selected MGs to enable the data transmission in the extended window after the end of the selected MG. For another instance, the selected MG may be rescheduled to avoid collision with the expected data transmission. In an example, the MG may be postponed to occur at a different time that does not overlap with the data transmission. In another example, the MGs may be staggered by configuring the interval of MGs according to the expected data transmission.

A corresponding exemplary method comprises the following steps performed by a UE:
determining a MG of a configured MG pattern with a plurality of measurement time gaps, the MG being usable by the UE for performing measurements within the MG,
determining a radio resource to be used by the UE for communication of data with a base station,
dropping the MG overlapping the radio resource in time,
communicating data with the base station using the radio resource.

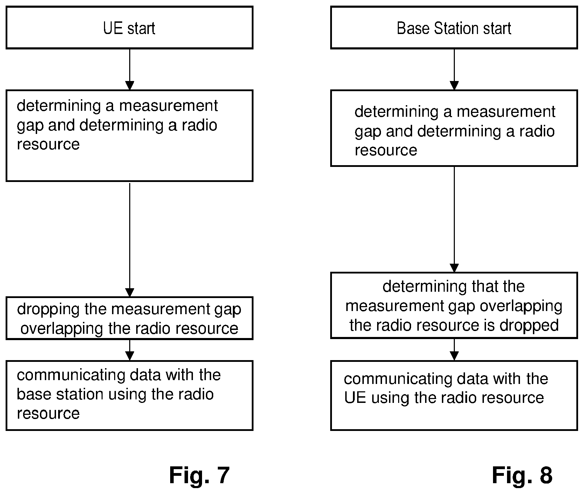

A corresponding sequence diagram for an exemplary UE behavior in line with the above-discussed UE and UE method is in **Fig. 7****.**

As apparent therefrom, the steps related to the determination of the MG and the radio resource are illustrated without a sequence. Correspondingly, the sequential order of the determinationrelated steps may comply with what is illustrated, i.e. UE determines the MG and determines the radio resource, and then drops the MG overlapping the radio resource.

Alternatively, the UE may first determine the MG and then the radio resource. Alternatively, the UE may first determine the radio resource and then the MG.

The above-described transmission procedure thus achieves the object and overcomes some of the drawbacks explained above. For instance, by dropping the overlapping MG, it is possible that media-frames are communicated as soon as they are available and a delay is avoided. Consequently, delay in communicating media-frames of a media-stream is reduced. Notably, this comes at the cost of a reduction and/or a delay of available MGs. For XR applications, however, the UE has usually a reduced mobility, i.e. does not move fast compared to other application, and thus it can be assumed that with a dropping or delaying of MGs is more acceptable than a delay in the communication of video streams.

Some exemplary implementations of the improved transmission procedure also involve improved base stations. Correspondingly, the improved transmission procedure also provides improved base stations that participate therein, as will be explained in the following.

**Fig. 6** illustrates a simplified and exemplary base station structure according to an exemplary implementation of the improved transmission procedure, which can be implemented based on the general base station structure explained in connection with Fig. 4. The various structural elements of the base station illustrated in said Fig. 6 can be interconnected between one another e.g., with corresponding input/output nodes (not shown) e.g., in order to exchange control and user data and other signals. Although not shown for illustration purposes, the base station may include further structural elements.

As apparent from Fig. 6, the base station may include a MG determination circuitry, a communication resource determination circuitry, a dropping MG circuitry, and a data transceiver.

In the present case as will become apparent from the below disclosure, the processing circuitry of the base station can thus be exemplarily configured to at least partly perform one or more of determining a MG, determining radio resources, determining that the UE drops MGs, determining a MG priority and a radio resource priority, etc.

In the present case as will become apparent from the below disclosure, the transceiver of the base station can thus be exemplarily configured to at least partly perform one or more of communicating data, sending the MG priority to the UE, etc.

One exemplary procedure as will be disclosed in more detail further below is implemented by a base station that includes the following. A processing circuitry determines a MG of a configured MG pattern with a plurality of measurement time gaps of a user equipment, UE, the MG being usable by the UE for performing measurements within the MG. The processing circuitry determines a radio resource to be used by the UE for communication of data with the base station. The processing circuitry determines that the UE drops the MG overlapping the radio resource in time. A transceiver of the base station communicates data with the UE using the radio resource.

A corresponding method comprises the following steps performed by the base station:
determining a MG of a configured MG pattern with a plurality of measurement time gaps of a user equipment, UE, the MG being usable by the UE for performing measurements within the MG,
determining a radio resource to be used by the UE for communication of data with the base station,
determining that the UE drops the MG overlapping the radio resource in time,
communicating data with the UE using the radio resource.

A corresponding sequence diagram for an exemplary base station behavior in line with the above-discussed base station and corresponding method is illustrated in **Fig. 8****.** The sequence diagram illustrates an exemplary and simplified implementation of the above presented base station method.

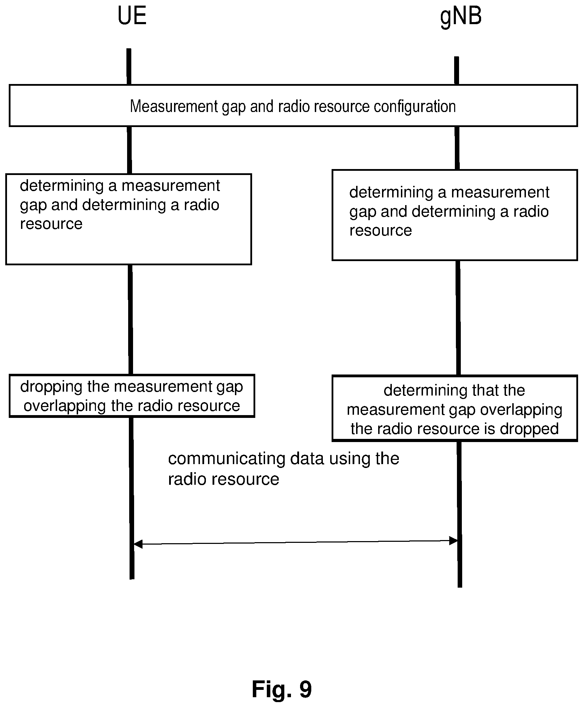

**Fig. 9** is a signalling diagram of an exemplary and simplified implementation of the improved transmission procedure, illustrating the exchange of messages between the different participating entities (here the UE and gNB) and the steps performed at these entities. The UE behaviour and gNB behaviour follow the above described UE and base station and the respective methods. Fig. 9 additionally illustrates how the base station configures the UE with the MG and the radio resources. For example, the gNB transmits a corresponding configuration message to the UE. Further, as mentioned already in connection with Fig. 7, the sequence order of steps at the UE side is exemplarily assumed as illustrated, but should be considered only exemplary and not limiting.

Different and exemplary implementations of the improved transmission procedure are explained in the following. For the explanation of the different implementation, some exemplary and simplifying assumptions are made.

According to one exemplary assumption, the data is data of a video frame or of a segment of a video frame. For example, the UE operates a video application, according to which video frames are generated with a video frame periodicity. Each video frame is generated within a jitter window having a jitter window length.

The solutions and their variants and implementations are primarily and exemplarily described on the basis of such a video stream scenario, according to which video frames are communicated between the UE and the base station. In one example, the video application is an application for extended Reality (XR), as presented above for 5G NR.

However, this is only an example of a scenario to which the solutions can be applied. The solutions can also be applied to other scenarios than video frames, e.g. in scenarios in which data is exchanged with a varying periodicity, e.g. over a generating window (such as the jitter window for video frames) or with a varying size of the data to be transmitted. Other scenarios are for example the exchange of quasi-periodic data, including data from a monitoring or sensing application, such as smart-metering, environmental monitoring or agricultural monitoring.

Also in these scenarios, due to the integer periodicity of the MG and the non-integer periodicity of the radio resources used for video frames, there may be a delay that radio resources being used in the face of a MG. In such scenarios, there may be an over-provisioning of MGs, which may result in a delay in the communication of data. The improved transmission procedures described herein facilitate reducing the delay of such transmissions.

However, for the sake of simplicity, it is assumed in the following that the UE and base station are operating a video application in which video frames are exchanged in the downlink and/or uplink. The video frames are generated with a certain video frame periodicity depending on the video application, e.g. based on the frames per second (fps) of the video stream, such as 60 fps, 90 fps, 120 fps or another suitable number. The following description assumes a 60 fps video stream as an example.

It is also assumed that while the video frames themselves are periodic (see fps above), the generation of the video frames is quasi-periodic and occurs at one point in time during a time window, here exemplarily called "jitter window".

For the sake of illustration and explanation of the concepts and ideas underlying the improved transmission schemes, the following discussion will assume that the data can be transmitted over a single radio resource (e.g., a periodic uplink radio resource). However, such an assumption should not be viewed as limiting the present invention. Rather, it is also possible that the data is too large so that more than one radio resource (e.g., two or more periodic radio resources) must be used to transmit the data.

In the following, three solutions are distinguished according to the present improved transmission procedure. In general, all solutions adjust the RRM measurement according to the ongoing traffic, communication direction (UL or DL), configuration of RRM measurement (e.g., Per-UE or Per-FR), configured measurement frequency (e.g., FR1 or FR2), configured resources for the traffic, and/or received control signals.

The first solution applies to a case where the UE detects that a MG overlaps a radio resource. In such a situation, a transceiver communicates data with the base station using the radio resource by dropping the MG. Thus, a communication delay caused by the MG can be reduced.

According to a second solution, the UE determines that a MG overlaps an on-duration period when the UE is operating with a discontinued reception function. In such a situation, the UE extends the overlapping on-duration period or drops the overlapping MG and determines an alternative MG after the overlapping on-duration period. Thus, the transceiver communicates data with the base station using the extended on-duration period or on-duration period. In this way, communication delay caused by the MG can be reduced.

The third solution applies to a case where the UE aligns a plurality of MGs with on-duration periods or periodic radio resources. Thus, a communication delay caused by the MG can be reduced.

### First Solution -MG overlapping a radio resource

As mentioned above, the first solution focuses on the case where the MG overlaps a radio resource in the time domain. In particular, the UE determines a MG of a configured MG pattern with a plurality of measurement time gaps, the MG being usable by the UE for performing measurements within the MG. Further, the processing circuitry determines a radio resource to be used by the UE for communication of data with a base station. In this case, the processing circuitry drops the MG and communicates data, e.g. of a media-frame of XR-traffic, with the base station using the radio resource. Thus, a communication delay caused by the MG can be reduced.

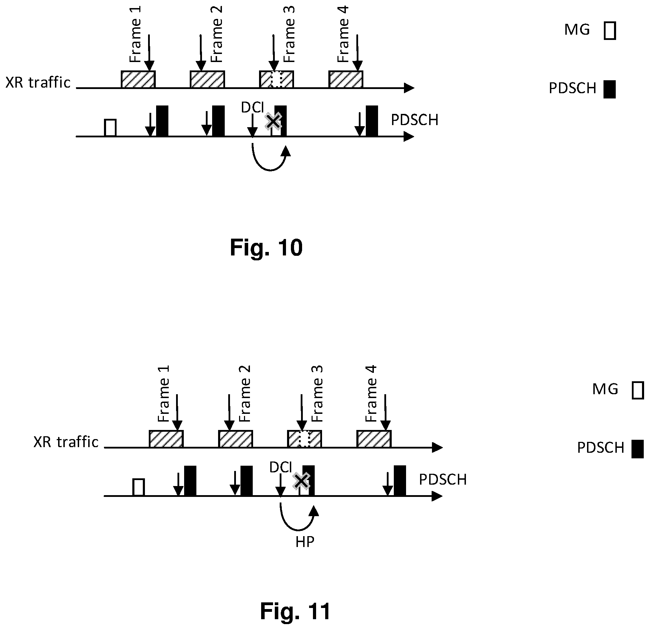

According to a first implementation, the UE may determine to drop the MG based on a priority, as shown for example shown in **Figs. 10** and **11****.** This configuration allows that a delay imposed by the MG could be avoided. However, according to some variants of the first implementation, the base station needs to communicate the priority, e.g. by sending a DCI, in advance to the UE to skip the MG.

In general, the UE may be configured to drop the MG based on a priority by default or configured semi-statically, when the UE is configured to communicate a plurality of periodic radio resources, or dynamically for one radio resource.

For example, as shown in **Fig. 10****,** the UE is configured, for example by default or semi-statically, to give a higher priority for PDSCH reception compared to using a MG for measuring. When the UE receives a DCI scheduling a high priority PDSCH that overlaps with the MG having a lower priority, the UE drops the MG and monitors the PDSCH to receive the data (as shown for Frame 3). Thus, a communication delay caused by the MG can be reduced. Notably, here the PDSCH case is presented as an example. A similar approach could be used for UL transmissions, e.g. PUSCH/PUCCH transmissions.

More specifically, the processing circuitry of the UE determines a MG priority. Further, the processing circuitry determines a radio resource priority. The UE may determine first the MG priority or first the radio resource priority. Then, the processing circuitry compares the radio resource priority and the MG priority. Based on the result of the comparison, the processing circuitry determines to drop the MG, in Figs. 10 and 11 the second MG, overlapping the third media-frame of the XR traffic in time domain.

Specifically, if the radio resource priority is higher than the MG priority, the MG is dropped. In addition, it can be defined to drop the MG if the radio resource priority is equal to the MG priority.

According to an exemplary 5G-compliant first option of the first implementation, the MG priority value according to a first variant is determined by using a MG configuration, e.g., by introducing a new priority field in the GapConfig, which is a part of MeasGapConfig. For example, in table 2 below, the new MG priority may be added as indicated. This would allow specific configurations of priority values of MG.

**Table 2**

| ***MeasGapConfig*** | | |
|---|---|---|
| | *gapFR2* | SetupRelease { GapConfig } |
| | *gapFR 1* | SetupRelease { GapConfig } |
| | *gapUE* | SetupRelease { GapConfig } |

| ***GapConfig*** | | |
|---|---|---|
| | *gapOffset* | INTEGER (0..159) |
| | *mg*/ | ENUMERATED { 1.5 msec, 3 msec, 3.5 msec, 4 msec, 5.5 msec, 6 msec } |
| | *mgrp* | ENUMERATED { 20 msec, 40 msec, 80 msec, 160 msec } |
| | *mgta* | ENUMERATED { 0 msec, 0.25 msec, 0.5 msec } |
| | *refServCellIndicator* | ENUMERATED { pCell, pSCell, mcg-FR2 } |
| | *Priority* | ENUMERATED {Low, High} |

Additionally or alternatively, according to a second variant of the first option, the MG priority value could be determined based on configured parameters such as at least one of the gap pattern Id, the MG length, and the MG repetition period. This would reduce the overhead.

In view of the first and second variants above, the MG configuration can be received from the base station, when a plurality of periodic radio resources for communication are determined. For example, the periodic radio resource can carry a relative priority indication with respect to a MG priority. The relative priority indication can be configured by a periodic configuration, semi-persistent transmission (SPS), or configured grant (CG). In particular, the relative priority indication may be configured semi-statically.

Additionally or alternatively, according to a third variant of the first option, the MG priority can be received dynamically from the base station, e.g. by DCI.

Alternatively, according to a fourth variant of the first option, the MG priority value can be a default value that is set for the MG, e.g. independently of the MG configuration.

Finally, according to a fifth variant of the first option, the priority may be determined by using at least two of the first to fourth variant of the first option.

According to an exemplary 5G-compliant second option of the first implementation, the radio resource priority is determined according to a first variant based on one a priority received from the base station. For example, as shown in the example in Fig. 11, the UE is configured (by default or semi-statically) with a low priority (LP) for MGs. A DCI can carry an indication for the priority of DL transmission. When the UE receives a DCI with a high priority (HP) scheduling a PDSCH that overlaps with the MG, the UE drops the MG and monitors the PDSCH to receive the data (as shown for Frame 3). In other words, the transceiver of the UE receives the radio resource priority from the base station for scheduling the radio resource transceiver of the UE. Notably, here the PDSCH case is presented as an example. A similar approach could be used for UL transmissions, i.e., PUSCH/PUCCH transmissions.

Alternatively, according to a second variant of the second option, the radio resource priority value can be determined based on configured parameters such as a priority assigned to a radio resource, which is for example defined by a higher layer such as PHY. Thus, existing priorities can be reused.

Additionally or alternatively, the according to a third variant, the radio resource priority value could be determined based on a determination if data are available for transmission. Thus, in the UL case, the drop can be executed conditionally based on the availability of data.

Additionally or alternatively, according to a fourth variant, the MG priority can be determined based on a data type to be carried out by the radio resource. For example, if the radio resource is for example used to communicate media-data of a media frame, this data type may indicate a higher priority than other data. For example, the data type may be determined based on one of the parameters such as varying size (I-frame or P-frame/B-frame), a periodicity of the video, the Jitter, and a delay budget.

In particular, in view of the first to fourth variants above, the radio resource priority can be configured, when for one radio resource or when a plurality of periodic radio resources for communication are determined. For example, the radio resource priority can be configured by DCI, a periodic configuration, semi-persistent transmission (SPS), or configured grant (CG).

Further, according to a fifth variant of the second option, the priority may be determined by using at least two of the first to fourth variant of the first option. In particular, the third and fourth variant may be combined.

Finally, according to a third option of the first implementation, the first and second option can be combined.

According to a second implementation, which can be combined with the first implementation, the UE determines an alternative MG after the radio resource in case the MG is dropped. The alternative measurement may be determined based on a predefined rule, and thus, the base station and the UE can determine the alternative MG, which is a new MG. Thus, the new MG according to a first option can be determined by a configuration

For example, in case the UE determines based on the priority as discussed in the first implantation to drop a MG, the UE determines the alternative MG. To avoid any further communication when the alternative measurement is created, the UE may determine the alternative MG based on a predefined rule. A predefined rule may be, for example, that the alternative MG starts upon termination of the radio resource or after a predefined time after ending of the dropped MG.

According to a second option of the second implementation, the UE may autonomously create an alternative MG and transmit a notification that an alternative MG is created. Thus, the base station can be notified to send a reference signal during the newly created alternative MG.

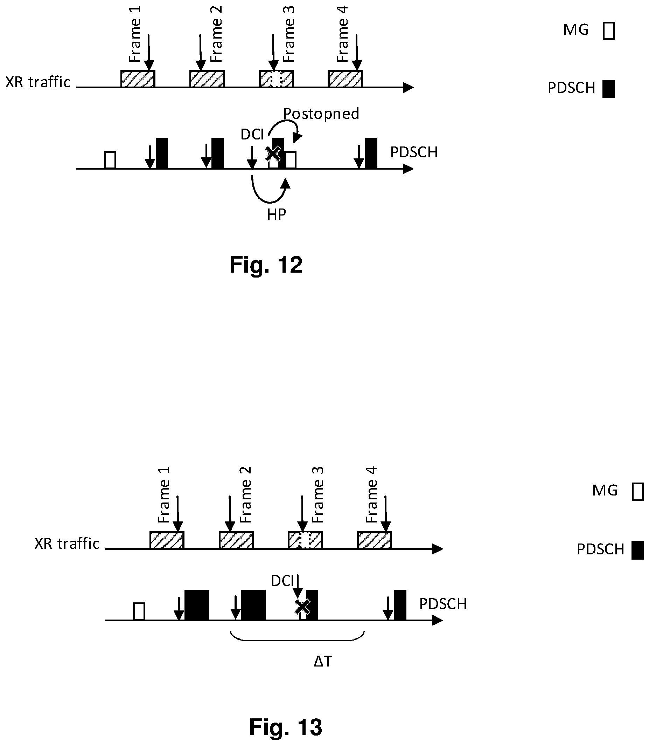

An example according to the second implementation with such an alternative MG is shown in **Fig.** 12. The configuration in Fig. 12 is similar to the configuration shown in Fig. 11. Additionally, when the UE receives the DCI with a high priority (HP) scheduling a PDSCH that overlaps with the MG, it postpones the MG and monitors the PDSCH to receive the data (as shown for Frame 3). The MG for the RRM measurement is performed after the PDSCH reception.

According to a third implementation, which can be combined with any of the first and second implementation, the UE receives from the base station a MG drop instruction for dropping one or more MGs. Then, the UE drops one or more MGs according to the received MG drop instruction.

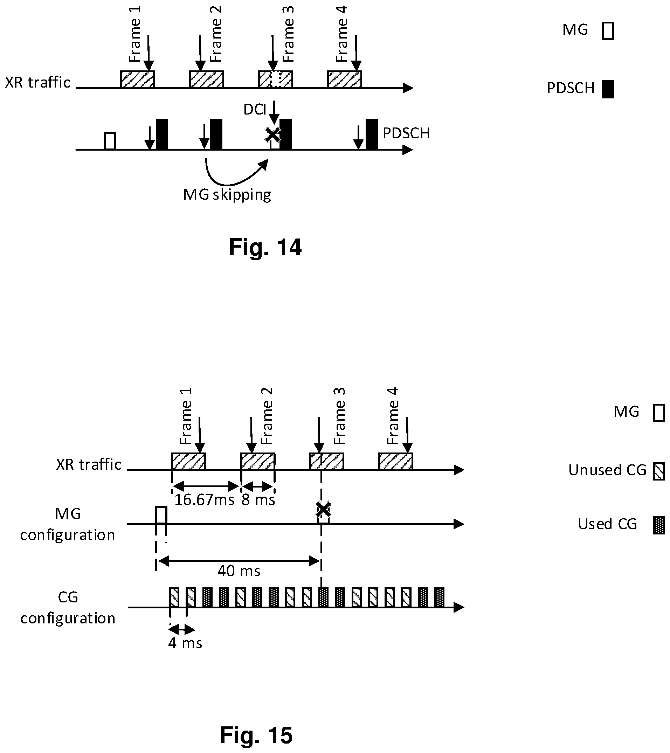

As shown for example shown in **Figs. 13** and **14****,** the UE can be indicated to drop at least one MG. For example, the base station can dynamically indicate which MGs are dropped. Thus, the base station can drop the MG for the UE, if there is a chance of data arrival. For example, when the frame is ready for transmission within the jitter window.

According to a first option of the third implementation, the MG drop instruction can indicate a measurement dropping time period during which the dropping instruction is active. This is for example shown in Fig. 13. In this example, the base station indicates the duration that the UE can skip the at least one of the next MG(s). The duration can be indicated explicitly or implicitly. According to the example, the base station indicates explicitly by a DCI (for scheduling Frame 2) to skip the RRM measurement for a duration of Δ*T* ms. As a result, the UE can be scheduled in time when the Frame 3 is arrived at the base station. As shown in the example, the base station can dynamically indicate which MGs are dropped. The base station can drop the MG for the UE if there is a chance of data communication. Notably, without dropping the MG, the base station is restricted in sending the DCI. In particular, the DCI could not be received at the time of frame 3 in view of the MG.

According to the first option, the time period may be determined based on a type of the communicated data. For example, for XR applications of communicating e.g. a stream, a longer time period may be selected that for an application when more measurements may be needed, e.g. the UE is moving.

Additionally or alternatively, according to a second option, the MG drop instruction can indicate a measurement drop value for indicating a number of MGs that are to be dropped. This is for example shown in Fig. 14. In this example, the UE can be indicated to drop a number of MGs, explicitly or implicitly. According to the example, the base station indicates by a DCI (that is used for scheduling the Frame 2) to skip one MG (the next one). As a result, the UE can be scheduled in time when the Frame 3 is arrived at the gNB.

As discussed above, the indication by the MG drop instruction can according to a first variant of the third implementation explicitly or according to a second variant of the third implementation implicitly. The first and second variant can be combined with the first and second option.

The first variant of the third implementation relates to an explicit indication. For example, a dynamically scheduled control information, e.g. a DCI, can be assigned with one or more dedicated bits indicating a number of MGs. Additionally or alternatively, the dedicated bits can indicate a dropping duration. For example, this indication of the measurement dropping duration can be presented in the form of a table (e.g., Table 3):

**Table 3**

| **Indication bits** | **Duration of dropping time period** |
|---|---|
| 00 | Δ*T*₀=4 ms |
| 01 | Δ*T*₁= 8 ms |
| 10 | Δ*T*₂=12 ms |
| 11 | Δ*T*₃=20 ms |

The structure of the table and its length can also depend on the configuration of the MG pattern.

The second variant of the third implementation relates to an implicit indication. Thus, the overhead for dropping MGs is reduced. The time duration or the number of MG instances can be implicitly carried by at least one of the Hybrid Automatic Repeat Request (HARQ) ID, DCI format, the modulation and coding scheme (MCS), and resource assignment. For instance, an implicit indication can be at least one of the following:
- the UE can skip MG(s) for a duration of Δ*Tn* when it receives a DCI scheduling the HARQ ID n,
- the UE can skip MG(s) for a duration of Δ*Tn* when it receives a DCI format n,
- the UE can skip the n number of MGs when it receives a DCI scheduling the HARQ ID n,
- the UE can skip the n number of MGs when it receives a DCI format n.

A combination of HARQ ID and DCI format, or other parameters (e.g., MCS or resource assignment), could be considered jointly for defining the duration of MG dropping or number the MGs are dropped.

The above first to third implementation have been described in view the examples shown in Figs. 11 to 14 by use dynamically scheduled resources in DL. Alternatively, any of the first to third implementation may be realized when a plurality of periodic radio resources are determined by the UE. In such a case, the UE can drop one or more MGs overlapping the plurality of periodic radio resources. In particular, the plurality of periodic radio resources relates to one of a downlink shared channel. Further, any of the first to third implementation may be realized in UL, e.g. using UCI, an uplink shared channel, or an uplink control channel.

Periodically scheduled resources, in downlink or in uplink, are particular advantageous in the field of XR applications, for example when communicating a media-frame having a periodic frame structure as discussed above. Notably, the jitter may cause that the frames having a pseudo periodic structure.

According to a fourth implementation, which can be combined with the first to third implementation, the circuitry, in operation, determines if data for transmission to the base station are available. For example, the UE determines if media-data of a frame within a jitter window are available for transmission. Thus, the UE can skip the MG only when there is a UL data available.

Further, the UE determines, among a plurality of periodic uplink radio resources, a periodic uplink radio resource to be used for transmitting the uplink data to the base station. The UE is for example configured with configured grant.

Then, the processing circuitry drops a MG that overlaps the determined periodic uplink radio resource and transmits the uplink data using the determined periodic uplink resource.

As shown for example shown in **Fig. 15****,** the UE can autonomously decide to drop the MG instance, based on availability of UL data.

Additionally, the UE may further decide to drop the MG based on the priorities as discussed in the first implementation. For example, the user service, such as a service related to the XR-traffic, can be assigned with a priority indication whether it can drop the MG. If a UE have a data from a service with a high priority, it can drop the MG in order to carry the data in UL.

In the example shown in Fig. 15, the UE is configured with video stream in UL. The UE can be configured with a CG configuration with 4 ms periodicity. The video traffic and/or the CG configuration can have a higher priority compared to the priority of the MG.

When a frame arrives, the UE can transmit it using CG resources. In this example, two CG resources are used for each frame. When the Frame 3 arrives, the UE can decide to drop the MG in order to perform the UL transmission in time base on the availability.

Notably, the arrow in Fig. 15 indicates that the data of Frame 3 are available at the first of the two resources. If, according to a not shown solution in Fig. 15, the data are available later, i.e. at the second of the two resources and not at the first of the two resources, the UE will not drop the MG. Thus, the availability of data is an alternative to a priority. Notably, as discussed above, the availability can be used as an additional priority value. In other words, a MG, which overlaps a periodic uplink radio resource that is not to be used for transmitting uplink data to the base station, is not dropped.

Even not shown with reference to Fig. 15, the MG can be dropped based on a notification as discussed in the third implementation. Additionally or alternatively, also not shown in Fig. 15, the UE may determine an alternative MG according to the second implementation.

Fig. 15 discusses the CG case used for UL as an example. A similar approach could be used for DL, for instance, by using SPS or DCI. In particular, the base station may determine the availability of the data and notify the UE by using the notification as discussed in the second implementation or change a priority of a resource according to the first implementation.

According to a fifth implementation, in addition to the UL scenarios described in the first to fourth implementation, the UE transmits to the base station a MG drop notification for indicating that one or more MGs are dropped. Thus, the UE can autonomously determine which MGs are dropped. This may be particularly advantageous in combination with the fourth implementation.

According to a first variant of the fifth implementation, the UE transmits the MG drop notification using an uplink control channel. According a second variant, the UE uses the radio resource. According to a third variant, the UE uses another radio resource among the plurality of periodic uplink radio resources.

According to a sixth implementation, in addition to any of the first to fifth implementation, the UE determines a drop limit value for limiting a number of MGs that are consecutively dropped and drops not a MG overlapping a radio resource, if a number of MGs that are consecutively dropped is higher than the drop limit value. This can ensure that the communication performance is not degraded too much.

A consecutive number n of MGs may be an integer number, wherein n is greater than or equal to 1.

The drop limit value can be configured according to a first option by the base station. For example, according to a first variant of the first option, the drop limit value can be configured with the MG priority as discussed in the first option of the first implementation. In more detail, the drop limit value can be as described in the first variant of the first option configured by using a MG configuration. Additionally or alternatively, in line with the second variant of the first option, the drop limit value can be determined based on configured parameters. Additionally or alternatively, according to the third variant of the first option, the drop limit value can be received dynamically from the base station. Alternatively, in line with the fourth variant of the first option, the drop limit value can be a default value that is set for the MG. Finally, in line with the fifth variant of the first option, the drop limit value may be determined by using at least two of the first to fourth variant of the first option.

Additionally or alternatively, according to a second variant of the first option of the third implementation, the drop limit value can be notified using a DCI or SPS configuration. For implicitly or explicitly indicating the drop limit is referred to the above description of the variants of the third implementation. For example, a dynamically scheduled control information, e.g. a DCI, can be assigned with one or more dedicated bits indicating explicitly a drop limit value. The dropping limit value can be implicitly carried by at least one of the Hybrid Automatic Repeat Request (HARQ) ID, DCI format, the modulation and coding scheme (MCS), and resource assignment.

The drop limit value can be determined according to a second option by the UE, e.g. by using mobility data or a data type used for the resource as describe above. Then, the UE may according to the fifth implementation notify the drop limit value to the base station.

According to a seventh implementation, in addition to any of the first to sixth implementation, the UE determines one or more drop pattern each defining periodic drop time periods, and the circuitry, in operation, drops one or more MGs occurring during the drop time periods of the one or more drop pattern. The dropping pattern can be well adjusted with the DL and UL traffic. A plurality of drop pattern can also be used for multi-modal traffics.

According to a first option of the seventh implementation, the drop pattern is determined by at least one of the following drop pattern parameters, a drop time duration of the drop time period, a drop pattern periodicity defining the periodicity of the drop time periods, and a drop pattern offset defining a start of the drop pattern relative to a beginning of a first MG of the MG pattern.

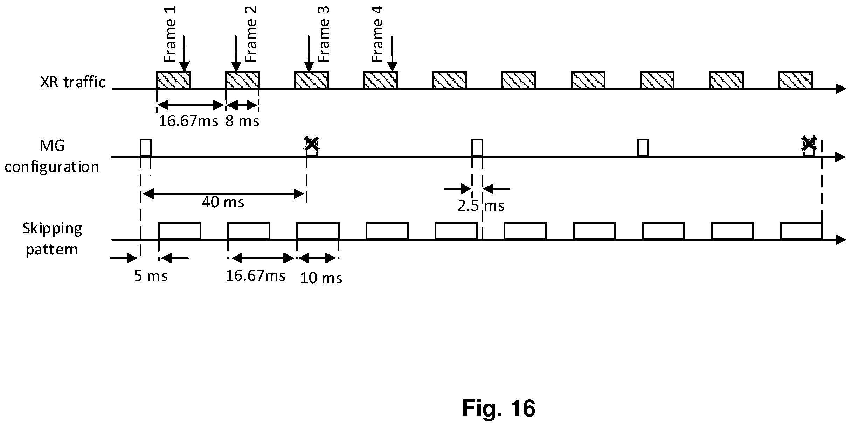

For example as shown in **Fig. 16****,** a MG configuration is provided with a skipping pattern with the periodicity of 16.67 ms and the duration of 10 ms. The offset of 5 ms is used from the beginning of the first MG instance, to align the pattern with the XR traffic. The MG instance is dropped if it fully overlaps with the skipping pattern. For non-overlap or partial overlap of the MG and the dropping pattern, the solutions discussed with the first to fifth implementation can be used.

Additionally or alternatively, according to a second option of the seventh implementation, a drop pattern periodicity defining the periodicity of the drop time periods is a non-integer value for aligning the at least one drop pattern with a periodicity of the data to be communicated. Thus, the MGs can be aligned with the XR traffic. In particular, for the drop pattern non-integer values can be used, e.g. multiples of 1/60, 1/90, and 1/120 ms as defined for the fps in view of XR traffic for frames.

Additionally or alternatively, according to a third option of the seventh implementation, the at least one drop pattern is configured together with the MG pattern.

For example, in line with the first variant of the first option of the first implementation, a new drop pattern parameter is introduced in the MeasGapConfig or the MG repetition period is provided with new non-integer values.

Additionally or alternatively, in line with the second variant of the first option of the first implementation, the drop pattern could be determined based on configured parameters such as at least one of the gap pattern ID, the MG length, and the MG repetition period. For example, new MG repetition periods can defined by using existing MG periods (emgrp). For example, if emgrp = 40 ms, the new MG repetition period (nmgrp) can be calculated using the following formula: nmgrp= n/(3*emgp). In particular, for n=1 nmgrp = 1/120 ms and for n =2 nmgrp = 1/60 ms. Thus, non-integer values can be determined by the MeasGapConfig.

Additionally or alternatively, in line with the third variant of the first option, the drop pattern can be received dynamically from the base station.

Alternatively, in line with the fourth variant of the first option, the drop pattern can be a default value that is set for the MG.

Finally, in line with the fifth variant of the first option, the drop pattern may be determined by using at least two of the first to fourth variant of the first option.

### Second Solution - MG overlaps an on-duration period

As mentioned above, the second solution focuses on the case when the circuity of the UE operates a discontinued reception function. The discontinued reception function includes a plurality of alternating on-duration periods and off-duration periods. As discussed above, discontinuous Reception (DRX) functionality enables to save battery resources of the UE. For further details of the discontinued reception function is referred to the section DRX functionality.

Further, similar to the first solution, the circuitry determines a MG of a configured MG pattern with a plurality of measurement time gaps, the MG being usable by the UE for performing measurements within the MG. For a description of the MG is referred to the above description, in particular the first solution.

Further, the discontinued reception function includes a plurality of alternating on-duration periods and off-duration periods. During on periods data communication is possible while during off-periods the transceiver is turned off to conserve power.

Similar to the first solution, the UE according to the second solution determines an overlap. According to the second solution the UE determines an overlap of an on-duration period with a MG. For the description of the determination of an overlap, it is referred to the above description.

According to a first modification of the second solution, in case one of the on-duration period overlaps a MG, the circuitry determines to extend the overlapping on-duration period. Further, the transceiver communicates data with the base station using the extended on-duration period.

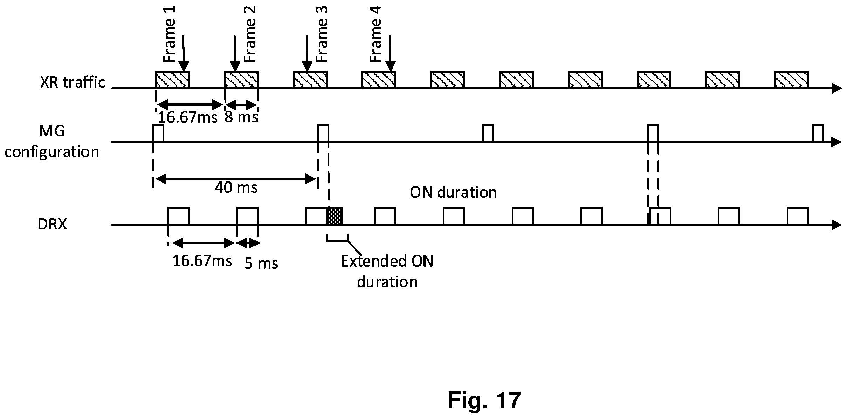

An example of this arrangement is shown in **Fig. 17****.** The UE is configured with on-duration periods with the periodicity of 16.67 ms and the duration of the on-duration periods is 5 ms. When an on-duration period collides with a MG, the UE extends according to the first modification the on-duration period. Thus, the UE can be scheduled even if the video frame arrives late (as shown for the Frame 3).

In particular, in the example shown in Fig. 17, the extended on duration enables that Frame 3 can be received during the third on-duration period, in particular during the extended on-duration period. In absence of such an extended on-duration period, the UE can receive Frame 3 only with a large delay, namely during the fourth on-duration period. Thus, the base station can schedule the UE if data arrives during the MG, thereby avoiding a delay.

In particular, as for example shown in Fig. 17, the extended on-duration period starts upon termination of the MG.

According to a second modification of the second solution, in case one of the on-duration periods overlaps the MG, the circuitry determines to drop the overlapping MG and determines an alternative MG after the overlapping on-duration period. Further, the transceiver, in operation, communicates data with the base station using the overlapping on-duration period. The MG does not impose delay for scheduling the traffic. Further, the UE can postpone the MG if it collides with the on-duration period. This approach can work well for Per-UE MG configuration.

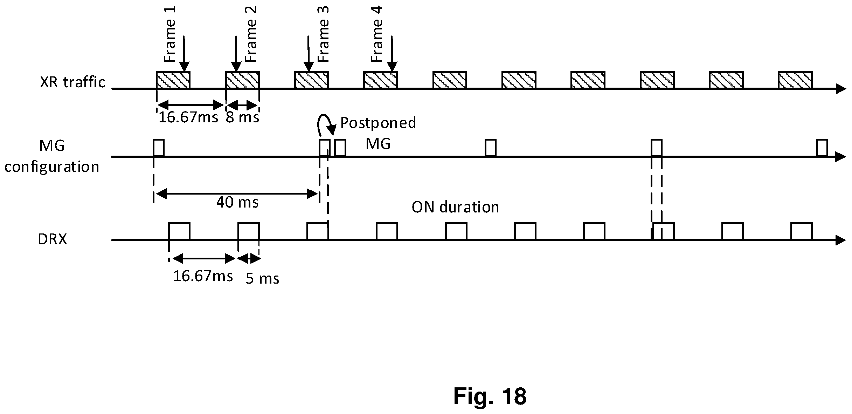

An example of this arrangement is shown in **Fig. 18****.** The UE is configured with on-duration periods, with the periodicity of 16.67 ms, and the duration of the on-duration periods is 5 ms. When the MG instance collides with an on-duration period, the UE postpones the MG to be performed after the end of on-duration period (as shown for the Frame 3).

In particular, as for example shown in Fig. 18, the alternative MG starts upon termination of the overlapping on-duration period. Alternatively, the UE starts a MG drop timer when the UE drops the MG. If the timer becomes greater than a MG drop threshold, which is for example predefined or preconfigure, the alternative MG starts. Thus, it is ensured that MG is not dropped for a long duration. The MG drop threshold may be for example indicating that the alternative MG is postponed not later than a certain value if the on-duration period is extended or lasting longer than the certain value. Additionally or alternatively, the MG drop threshold may indicate that the MG is not sent within a certain time.

Even not shown in Figs. 17 and 18 of the second solution, the circuitry determines a radio resource to be used by the UE for communication of data with a base station. In case the radio resource collides with the MG, the above discussed first solution can be applied. Considering the first modification shown for example in Fig. 17, such a combination with the first solution the time delay is further reduced. Considering the second modification shown for example in Fig. 18, the dropping discussed in the first solution may be based additionally or alternatively when the UE determines discontinuous reception.

According to a first option of the second solution, which is not shown in the figures, the UE determines the radio resource and the MG with their associated priorities according to the first implementation of the first solution. Depending on the priority, the UE may drop the MG or extend the on-duration. For dropping the MG, it is referred to the above description of the first solution and the second modification of the second solution. For the extended on-duration, it is referred to the above description of the first modification of the second solution.

According to a second option of the second solution, the circuitry of the UE determines the plurality of periodic on-duration periods with a cycle periodicity having a non-integer value. Further, the non-integer value of the cycle periodicity is the same or a multiple of a periodicity of the data to be communicated, wherein the on-duration periods of the discontinued reception function are aligned with the data, e.g. data of a media-stream, to be communicated. This enables to combine the effects of power saving and avoiding delays in reception.

According to a further implementations of the second solution, it is referred to the implementations of the first solution. These implementations could be configured and/or enabled as a part of DRX configuration.

For example, in line with the first implementation of the first solution, the UE determines to extend the on-duration or drop the measurement gap based on a priority. In particular, the processing circuitry of the UE determines a MG priority. Further, the processing circuitry determines a DRX priority. The UE may determine first the MG priority or first the DRX priority. Then, the processing circuitry compares the DRX priority and the MG priority. Based on the result of the comparison, the processing circuitry determines to extend the on-duration or drop the MG.

For example, if the DRX priority is higher than the MG priority, the MG is postponed. Alternatively, if the DRX priority is lower than the MG priority, the on-duration is extended.

According to an exemplary 5G-compliant first option of the first implementation second solution is referred to the first option of the first implementation of the first solution.

According to an exemplary 5G-compliant second option of the first implementation of the second solution, a DRX priority can be configured as discussed with the radio resource priority.

Finally, according to a third option of the first implementation, the first and second option can be combined.

Further, in line with the third implementation of the first solution, the UE according to a third implementation of the second solution can receive an instruction from the base station. In particular, in line with the third implementation of the first solution, which can be combined with the first implementation of the second solution, the UE receives from the base station a MG drop or on-duration extend instruction for dropping one or more MGs or extending one or more on-duration. Then, the UE drops one or more MGs or extends on or more on-durations according to the received MG drop instruction. For a detailed description, in particular of explicit or implicit notification, it is referred to the above description of the third implementation of the first solution.

Further, in line with the fourth implementation of the first solution, the UE according to a fourth implementation of the second solution can be combined with the first and third implementation, and the circuitry determines if data for transmission to the base station are available. For example, the UE determines if media-data of a frame within a jitter window are available for transmission.

Thus, the UE can drop the MG or extend the on-duration only when there is a UL data available. For a detailed description of the determination if data are available, it is referred to the above description of the fourth implementation of the first solution.

According to a fifth implementation, in addition to the UL scenarios described in the first, third and fourth implementation, the UE can transmit to the base station a MG drop or on-duration extend notification for indicating that one or more MGs are dropped or one or more on-durations are extended. Thus, the UE can autonomously determine which MGs are dropped or on-durations are extended. This may be particularly advantageous in combination with the fourth implementation.

According to a first variant of the fifth implementation, the UE transmits the MG drop notification using an uplink control channel. According a second variant, the UE uses the radio resource. According to a third variant, the UE uses another radio resource among the plurality of periodic uplink radio resources.

### Third Solution - Aligning a plurality of MGs with on-duration periods or periodic radio resources

As mentioned above, the third solution aligns a plurality of MGs with on-duration periods or periodic radio resources.

Similar to the first solution, a circuitry determines a radio resource to be used by the UE for communication of data with a base station. Further, the circuitry determines a plurality of periodic MGs of a configured MG pattern with a plurality of measurement time gaps, the MGs being usable by the UE for performing measurements within the MGs. For a description of the determination of the radio resource and the MG is referred to the above description.

According to the third solution, the plurality of periodic MGs is aligned with on-duration periods or periodic radio resources such that the periodic MGs are outside the on-duration periods or outside periodic radio resources. A transceiver communicates data with the base station using the radio resource. This solution enables that the MGs are be well aligned with XR traffics with non-integer periodicities by using non-integer values, which are for example defined for on-durations or periodic radio resources. In other words, the MGs are defined relative to other periodic pattern, namely periodic radio resources or periodic on-durations. This enables to avoid the MG collisions with data communication.

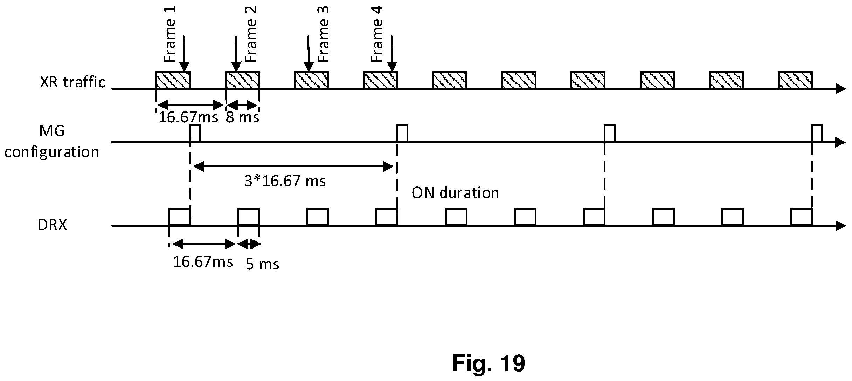

According to an example, shown in **Fig. 19****,** the UE is configured with an on-duration period of 16.67 ms with an on-duration of 5 ms. The MG instances are then defined according to the on-duration period (i.e., the MG periodicity is 3*16.67 ms). A MG occurs after each three on-durations, starting from the end of an on-duration.

According to a first implementation of the third solution, the plurality of on-duration periods are periods during which the transceiver is active. For a description of discontinuous reception is referred to the above.

According to a second implementation, the plurality of periodic radio resources relating to one of a downlink shared channel, an uplink shared channel, a downlink control channel, or an uplink control channel.

According to a first variant of the third solution, a measurement periodicity of the plurality of alternative periodic MGs is n times an assignment periodicity of the on-duration periods or the periodic radio resources, wherein n is an integer greater than or equal to 1. For example, as shown in Fig. 19, n can be 3.

According to a second variant, the MGs start upon termination of the periodic on-duration period or at the end of the periodic radio resource.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1 st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also, a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, user equipment (UE) is provided that includes the following. A circuitry of the UE determines a measurement gap (MG) of a configured MG pattern with a plurality of measurement time gaps, the MG being usable by the UE for performing measurements within the MG. The circuitry determines a radio resource to be used by the UE for communication of data with a base station. The processing circuitry drops the MG overlapping the radio resource in time domain. A transceiver of the UE communicates data with the base station using the radio resource.

According to a second aspect provided in addition to the first aspect, the circuitry determines a MG priority and a radio resource priority and drops the MG in case the radio resource priority is higher than the MG priority. In one optional implementation, the configured MG pattern comprises a MG priority and/or the transceiver of the UE, in operation, receives the MG priority from the base station. In one optional implementation, the radio resource priority is determined based on one or more of:
- priority received from the base station,
- configured radio resource priority,
- data available for transmission,
- data type to be carried out by the radio resource,
- based on a priority configured for a plurality of periodic radio resources, and
- the transceiver of the UE, in operation, receives the radio resource priority from the base station for scheduling the radio resource.

According to a third aspect provided in addition to any one of the first to second aspects, the circuitry determines an alternative MG after or before the radio resource in case the MG is dropped. In one optional implementation the alternative MG starts upon termination of the radio resource.

According to a fourth aspect provided in addition to any one of the first to third aspects, the transceiver of the UE receives from the base station a MG drop instruction for dropping one or more MGs, and the circuitry drops one or more MGs according to the received MG drop instruction. In one optional implementation wherein the MG drop instruction indicates a measurement dropping time period during which the dropping instruction is active and/or the MG drop instruction indicates a measurement drop value for indicating a number of MGs that are to be dropped.

According to a fifth aspect, provided in addition to any one of the first to fourth aspects, the circuitry determines a plurality of periodic radio resources and drops one or more MGs overlapping the plurality of periodic radio resources. In one optional implementation the plurality of periodic radio resources relates to one of a downlink shared channel, an uplink shared channel, or an uplink control channel.

According to a sixth aspect, provided in addition to any one of the first to fifth aspects, the circuitry, in operation,
- determines if data for transmission to the base station are available,
- determines, among a plurality of periodic uplink radio resources, a periodic uplink radio resource to be used for transmitting the uplink data to the base station, and
- drops a MG that overlaps the determined periodic uplink radio resource, and
- transmits the uplink data using the determined periodic uplink resource.

In one optional implementation a MG, which overlaps a periodic uplink radio resource that is not to be used for transmitting uplink data to the base station, is not dropped.

According to a seventh aspect, provided in addition to any one of the first to sixth aspects, the transceiver of the UE, in operation, transmits to the base station a MG drop notification for indicating that one or more MGs are dropped. In one optional implementation the UE transmits the MG drop notification using one of
- an uplink control channel,
- the radio resource,
- another radio resource among the plurality of periodic uplink radio resources.

According to an eighth aspect provided in addition to any one of the first to seventh aspects, the circuitry, in operation, determines a drop limit value for limiting a number of MGs that are consecutively dropped and drops not a MG overlapping a radio resource, if a number of MGs that are consecutively dropped is higher than the drop limit value. In one optional implementation the drop limit value is configured by the base station.

According to a ninth aspect provided in addition to any one of the second to eighth aspects, the circuitry, in operation, determines one or more drop pattern each defining periodic drop time periods, and the circuitry, in operation, drops one or more MGs occurring during the drop time periods of the one or more drop pattern. In one optional implementation at least one of the drop patterns is determined by at least one of the following drop pattern parameters,
- a drop time duration of the drop time period
- a drop pattern periodicity defining the periodicity of the drop time periods, and
- a drop pattern offset defining a start of the drop pattern relative to a beginning of a first MG of the MG pattern.

In one optional implementation a drop pattern periodicity defining the periodicity of the drop time periods is a non-integer value for aligning the at least one drop pattern with a periodicity of the data to be communicated. In one optional implementation the at least one drop pattern is configured together with the MG pattern.

According to a tenth aspect, a use equipment (UE) is provided with a circuitry, which in operation, determines a measurement gap (MG) of a configured MG pattern with a plurality of measurement time gaps, the MG being usable by the UE for performing measurements within the MG. The circuitry of the UE operates a discontinued reception function, including a plurality of alternating on-duration periods and off-duration periods, and in case one of the on-duration periods overlaps a MG, the circuitry determines to extend the overlapping on-duration period and the transceiver, in operation, communicates data with the base station using the extended on-duration period, or the circuitry drops the overlapping MG and determines an alternative MG after the overlapping on-duration period, and a transceiver communicates data with the base station using the on-duration period.

According to an eleventh aspect provided in addition to the tenth aspect, in case the circuitry extends the on-duration, the extended on-duration period starts upon termination of the MG and in case the circuitry determines an alternative MG, the alternative MG starts upon termination of the overlapping on-duration period. In one optional implementation the circuitry of the UE determines the plurality of periodic on-duration periods with a cycle periodicity having a non-integer value, wherein the non-integer value of the cycle periodicity is the same or a multiple of a periodicity of the data to be communicated, wherein the on-duration periods of the discontinued reception function are aligned with the data to be communicated.

According to a twelfth aspect, provided in addition to any one of the tenth to eleventh aspects, the circuitry determines a MG priority and an on-duration priority and decides to drop the MG or extend the on-duration based on comparing the on-duration priority and the MG priority. In one optional implementation the configured MG pattern comprises a MG priority and/or the transceiver of the UE receives the MG priority from the base station. In one optional implementation the on-duration priority is determined based on one or more of:
- priority received from the base station,
- configured on-duration priority,
- data available for transmission,
- data type to be carried out by the on-duration,
- based on a priority configured for a plurality of periodic on-durations, and
- the transceiver of the UE, in operation, receives the on-duration priority from the base station for scheduling the on-duration.

According to a thirteenth aspect, provided in addition to any one of the tenth to twelfth aspects, the transceiver of the UE receives from the base station a MG drop instruction or an on-duration extend instruction for dropping one or more MGs or extending one or a plurality of on-durations, respectively, and the circuitry drops one or more MGs according to the received MG drop instruction or extends one or more on-durations according to the received on-duration extend instruction. In one optional implementation the MG drop instruction and the on-duration extend instruction indicates a measurement dropping time period during which the dropping instruction and the on-duration extend instruction is active and/or the MG drop instruction indicates a measurement drop value for indicating a number of MGs that are to be dropped and the on-duration extend instruction indicates an on-duration extend value for indicating a number of on-durations that are to be extended.

According to a fourteenth aspect, provided in addition to any one of the tenth to thirteenth aspects, the transceiver of the UE transmits to the base station a MG drop notification for indicating that one or more MGs are dropped or an on-duration extend notification for indicating that one or more on-durations are extended. In one optional implementation the UE transmits the MG drop notification and the on-duration extend notification using one of
- an uplink control channel,
- the radio resource,
- another radio resource among the plurality of periodic uplink radio resources.

According to a fifteenth aspect, a use equipment (UE) comprises a circuitry, which in operation, determines a radio resource to be used by the UE for communication of data with a base station, the circuitry determines a plurality of periodic measurement gaps, MGs, of a configured MG pattern with a plurality of measurement time gaps, the MGs being usable by the UE for performing measurements within the MGs, wherein the plurality of periodic MGs is aligned with on-duration periods or periodic radio resources such that the periodic MGs are outside the on-duration periods or outside periodic radio resources. A transceiver of the UE communicates data with the base station using the radio resource.

According to a sixteenth aspect, provided in addition to the fifteenth aspect, the plurality of on duration periods are periods during which the transceiver is active, and the plurality of periodic radio resources relating to one of a downlink shared channel, an uplink shared channel, a downlink control channel, or an uplink control channel. In one optional implementation a measurement periodicity of the plurality of alternative periodic MGs is n times an assignment periodicity of the on-duration periods or the periodic radio resources, wherein n is an integer greater than or equal to 1.

According to a seventeenth aspect, a method is provided comprising the following steps performed by a user equipment (UE):
determining a measurement gap (MG) of a configured MG pattern with a plurality of measurement time gaps, the MG being usable by the UE for performing measurements within the MG,
determining a radio resource to be used by the UE for communication of data with a base station,
dropping the MG overlapping the radio resource in time domain, and
communicating data with the base station using the radio resource.

According to an eighteenth aspect, a base station is provided comprising the following. A circuitry, which in operation, determines a measurement gap (MG) of a configured MG pattern with a plurality of measurement time gaps of a user equipment (UE), the MG being usable by the UE for performing measurements within the MG. The circuitry determines a radio resource to be used by the UE for communication of data with the base station. The circuitry determines that the UE drops the MG overlapping the radio resource in time domain. A transceiver of the base station communicates data with the UE using the radio resource.

According to a nineteenth aspect, providing in addition to the eighteenth aspect, the circuitry, in operation, sets a measurement gap priority, determines a radio resource priority, and determines that the UE drops the measurement gap in case the radio resource priority is higher than the measurement gap priority. one optional implementation the circuitry configures a measurement gap pattern comprising a measurement gap priority and/or the transceiver of the base station, in operation, transmits the measurement gap priority to the UE.

According to a twentieth aspect, a method is provided comprising the following steps performed by a base station:
determining a measurement gap (MG) of a configured MG pattern with a plurality of measurement time gaps, the MG being usable by a user equipment UE for performing measurements within the MG,
determining a radio resource to be used by the UE for communication of data with the base station,
determining that the UE drops the MG overlapping the radio resource in time domain, and
communicating data with the UE using the radio resource.

According to a twenty-first aspect, an integrated circuit is provided, which, in operation, controls a process of a user equipment (UE) the process comprising the following steps performed by the UE:
determining a measurement gap (MG) of a configured MG pattern with a plurality of measurement time gaps, the MG being usable by the UE for performing measurements within the MG,
determining a radio resource to be used by the UE for communication of data with a base station,
dropping the MG overlapping the radio resource in time domain, and
communicating data with the base station using the radio resource.

According to a twenty-second aspect, an integrated circuit is provided, which, in operation, controls a process of a base station, the process comprising the following steps performed by the base station:
determining a measurement gap (MG) of a configured MG pattern with a plurality of measurement time gaps, the MG being usable by a user equipment UE for performing measurements within the MG,
determining a radio resource to be used by the UE for communication of data with the base station,
determining that the UE drops the MG overlapping the radio resource in time domain, and communicating data with the UE using the radio resource.

## Claims

1. A user equipment, UE, comprising:
a circuitry, which in operation, determines a measurement gap, MG, of a configured MG pattern with a plurality of measurement time gaps, the MG being usable by the UE for performing measurements within the MG,
the circuitry, which in operation, determines a radio resource to be used by the UE for communication of data with a base station,
the circuitry, which in operation, drops the MG overlapping the radio resource in time domain,
a transceiver, which in operation, communicates data with the base station using the radio resource.

2. The UE according to claim 1, wherein the circuitry, in operation, determines a MG priority and a radio resource priority and drops the MG in case the radio resource priority is higher than the MG priority,
optionally wherein the configured MG pattern comprises a MG priority and/or the transceiver of the UE, in operation, receives the MG priority from the base station,
optionally wherein the radio resource priority is determined based on one or more of:
- priority received from the base station,
- configured radio resource priority,
- data available for transmission,
- data type to be carried out by the radio resource,
- based on a priority configured for a plurality of periodic radio resources, and
- the transceiver of the UE, in operation, receives the radio resource priority from the base station for scheduling the radio resource.

3. UE according to claim 1 or 2, wherein the circuitry, in operation determines an alternative MG after the radio resource in case the MG is dropped, optionally wherein the alternative MG starts upon termination of the radio resource.

4. UE according to any one of claims 1 to 3, wherein the transceiver of the UE, in operation, receives from the base station a MG drop instruction for dropping one or more MGs, and the circuitry, in operation, drops one or more MGs according to the received MG drop instruction,
optionally wherein the MG drop instruction indicates a measurement dropping time period during which the dropping instruction is active and/or the MG drop instruction indicates a measurement drop value for indicating a number of MGs that are to be dropped.

5. UE according to any one of claims 1 to 4, wherein the circuitry, in operation, determines a plurality of periodic radio resources and drops one or more MGs overlapping the plurality of periodic radio resources,
optionally wherein the plurality of periodic radio resources relates to one of a downlink shared channel, an uplink shared channel, or an uplink control channel.

6. UE according to any one of claim 1 to 5, wherein the circuitry, in operation,
- determines if data for transmission to the base station are available,
- determines, among a plurality of periodic uplink radio resources, a periodic uplink radio resource to be used for transmitting the uplink data to the base station,
- drops a MG that overlaps the determined periodic uplink radio resource, and
- transmits the uplink data using the determined periodic uplink resource,
optionally wherein a MG, which overlaps a periodic uplink radio resource that is not to be used for transmitting uplink data to the base station, is not dropped.

7. UE according to any one of claims 1 to 6, wherein the transceiver of the UE, in operation, transmits to the base station a MG drop notification for indicating that one or more MGs are dropped,
optionally wherein the UE transmits the MG drop notification using one of
- an uplink control channel,
- the radio resource,
- another radio resource among the plurality of periodic uplink radio resources.

8. UE according to any one of claims 1 to 7, wherein the circuitry, in operation, determines a drop limit value for limiting a number of MGs that are consecutively dropped and drops not a MG overlapping a radio resource, if a number of MGs that are consecutively dropped is higher than the drop limit value,
optionally wherein the drop limit value is configured by the base station.

9. UE according to any of claims 1 to 8, wherein the circuitry, in operation, determines one or more drop pattern each defining periodic drop time periods, and the circuitry, in operation, drops one or more MGs occurring during the drop time periods of the one or more drop pattern,
optionally wherein at least one of the drop patterns is determined by at least one of the following drop pattern parameters,
- a drop time duration of the drop time period
- a drop pattern periodicity defining the periodicity of the drop time periods, and
- a drop pattern offset defining a start of the drop pattern relative to a beginning of a first MG of the MG pattern,
optionally wherein a drop pattern periodicity defining the periodicity of the drop time periods is a non-integer value for aligning the at least one drop pattern with a periodicity of the data to be communicated,
optionally wherein the at least one drop pattern is configured together with the MG pattern.

10. User equipment, UE, comprising,
a circuitry, which in operation, determines a measurement gap, MG, of a configured MG pattern with a plurality of measurement time gaps, the MG being usable by the UE for performing measurements within the MG,
the circuitry of the UE, in operation, operates a discontinued reception function, including a plurality of alternating on-duration periods and off-duration periods, and
in case one of the on-duration periods overlaps a MG,
the circuitry in operation, determines to extend the overlapping on-duration period and a transceiver, in operation, communicates data with the base station using the extended on-duration period, or
the circuitry in operation, drops the overlapping MG and determines an alternative MG after the overlapping on-duration period, and a transceiver, in operation, communicates data with the base station using the on-duration period.

11. UE according to claim 10, wherein
in case the circuitry extends the on-duration, the extended on-duration period starts upon termination of the MG and
in case the circuitry determines an alternative MG, the alternative MG starts upon termination of the overlapping on-duration period,
optionally wherein the circuitry of the UE, in operation, determines the plurality of periodic on-duration periods with a cycle periodicity having a non-integer value, wherein the non-integer value of the cycle periodicity is the same or a multiple of a periodicity of the data to be communicated, wherein the on-duration periods of the discontinued reception function are aligned with the data to be communicated.

12. User equipment, UE, comprising,
a circuitry, which in operation, determines a radio resource to be used by the UE for communication of data with a base station,
the circuitry, in operation, determines a plurality of periodic measurement gaps, MGs, of a configured MG pattern with a plurality of measurement time gaps, the MGs being usable by the UE for performing measurements within the MGs,
wherein the plurality of periodic MGs is aligned with on-duration periods or periodic radio resources such that the periodic MGs are outside the on-duration periods or outside periodic radio resources, and
a transceiver, which in operation, communicates data with the base station using the radio resource.

13. UE according to claim 12,
wherein the plurality of on duration periods are periods during which the transceiver is active, and
the plurality of periodic radio resources relating to one of a downlink shared channel, an uplink shared channel, a downlink control channel, or an uplink control channel, optionally wherein a measurement periodicity of the plurality of alternative periodic MGs is n times an assignment periodicity of the on-duration periods or the periodic radio resources, wherein n is an integer greater than or equal to 1.

14. A method comprising the following steps performed by a user equipment, UE:
determining a measurement gap, MG, of a configured MG pattern with a plurality of measurement time gaps, the MG being usable by the UE for performing measurements within the MG,
determining a radio resource to be used by the UE for communication of data with a base station,
dropping the MG overlapping the radio resource in time domain,
communicating data with the base station using the radio resource.

15. A base station comprising:
circuitry, which in operation, determines a measurement gap, MG, of a configured MG pattern with a plurality of measurement time gaps of a user equipment, UE, the MG being usable by the UE for performing measurements within the MG,
the circuitry, which in operation, determines a radio resource to be used by the UE for communication of data with the base station,
the circuitry, which in operation, determines that the UE drops the MG overlapping the radio resource in time domain,
a transceiver, which in operation, communicates data with the UE using the radio resource.
